# EUROPÄISCHE PATENTSCHRIFT

(11) **EP 1 984 924 B1**
(45) Veröffentlichungstag und Bekanntmachung des Hinweises auf die Patenterteilung: **01.09.2010**
(21) Anmeldenummer: 07711465.0
(22) Anmeldetag: 08.02.2007
(51) Int. Cl.: G21C 3/322

(54) **BRENNELEMENT FÜR EINEN DRUCKWASSERKERNREAKTOR**
FUEL ASSEMBLY FOR A PRESSURIZED WATER NUCLEAR REACTOR
ELEMENT DE COMBUSTIble POUR REACTEUR NUCLEAIRE A EAU SOUS PRESSION

(30) Priorität: 18.02.2006 DE 102006007591
(43) Veröffentlichungstag der Anmeldung: 29.10.2008
(73) Patentinhaber: AREVA NP GmbH, 91052 Erlangen (DE)
(72) Erfinder: STABEL, Jürgen, 91058 Erlangen (DE); BORSDORF, Udo, 91315 Höchstadt (DE)
(74) Vertreter: Mörtel, Alfred
(86) Internationale Anmeldenummer: PCT/EP2007/001052
(87) Internationale Veröffentlichungsnummer: WO 2007/093313

(56) Entgegenhaltungen:
- EP-A- 1 087 406
- DE-A1- 1 589 472
- DE-A1- 3 139 823
- DE-B3- 10 334 580
- FR-A1- 2 571 171
- JP-A- 11 258 375

## Beschreibung

Die Erfindung bezieht sich auf ein Brennelement für einen Druckwasserkernreaktor, wie es beispielsweise aus der DE 103 34 580 B3 bekannt ist.

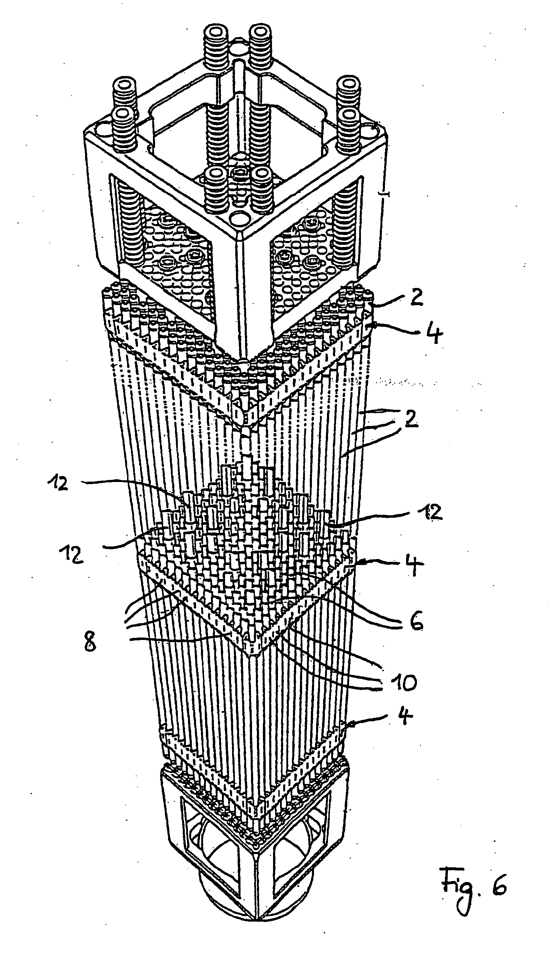

Der prinzipielle Aufbau eines Brennelementes für einen Druckwasserkernreaktor ist exemplarisch in Fig. 6 veranschaulicht. Bei einem solchen Brennelement sind eine Vielzahl von Brennstäben 2 in Stabrichtung (axial) parallel zueinander durch mehrere, voneinander axial beabstandete Abstandhalter 4 geführt, die jeweils ein zweidimensionales Gitter mit einer Mehrzahl von Zellen 6 bilden, die in Spalten 8 und Zeilen 10 angeordnet sind. Durch die Zellen 6 dieses Gitters sind außer den Brennstäben 2 auch an ausgewählten Positionen Stützrohre hindurch geführt, die keinen Brennstoff enthalten und zur Aufnahme und zum Führen von Steuerstäben vorgesehen sind (sog. Steuerstabführungsrohre 12). Außerdem können noch Stützrohre vorhanden sein, die ebenfalls keinen Brennstoff enthalten und lediglich zur Erhöhung der Stabilität dienen (Instrumentierungsrohre oder Strukturrohre, im beispielhaft dargestellten Brennelement 2 sind weder Instrumentierungsrohre noch Strukturrohre vorgesehen). Diese Stützrohre sind anders als die Brennstäbe in den Zellen 6 mit den Abstandhaltern 4 verschweißt, so dass ihre stabilisierende Wirkung über die gesamte Einsatzdauer des Brennelements 2 gewährleistet ist.

Bei hypothetischen äußeren Störfällen, beispielsweise bei einem Erdbeben oder bei einem Kühlmittelverlust mit großem Bruch (LOCA - Loss Of Coolant Accident) können die Abstandhalter durch die benachbarten Brennelemente eine erhebliche Stoßbelastung erfahren. Die dabei auftretenden dauerhaften Verformungen, die sich in der Regel als Ausknicken einzelner Reihen oder Spalten bemerkbar machen, dürfen zulässige Höchstwerte nicht überschreiten, um zu gewährleisten, dass die Steuerstäbe weiterhin in die Steuerstabführungsrohre eingeführt werden können, um so einen sicheren Weiterbetrieb oder ein sicheres Abschalten der Anlage zu ermöglichen. Während plastische Deformationen im begrenzten Umfang prinzipiell erlaubt sind, muss demzufolge ein größeres Ausbeulen, das zu einem signifikantem Versatz der im Brennelement angeordneten Steuerstabführungsrohre führt, vermieden werden.

Die Abstandhalter werden demnach so ausgelegt, daß die zu erwartenden Stoßbelastungen nicht zu einem größerem Ausbeulen oder Ausknicken des Abstandhalters führen. In der Praxis wird als Entwicklungsziel eine Beulfestigkeit für frische, unbestrahlte Abstandhalter (BOL (= Begin Of Life)-Abstandhalter) von ca. 20 kN angestrebt. Damit ist für BOL-Abstandhalter, die im Rahmen eines Störfalles (Erdbeben, LOCA) auftretende Stoßbelastung (flächig wirkende Querkraft) abtragbar, so lange diese kleiner als 20 kN ist.

Dennoch können insbesondere bei Abstandhaltern, die längere Zeit im Einsatz waren und am Ende ihrer Einsatzzeit (EOL = End Of Life) angelangt sind, in ungünstigen Situationen Kräfte auftreten, die größer sind als deren Beulfestigkeit, da diese im Vergleich zu neuen Abstandhaltern deutlich reduziert sein kann. Diese Verringerung der Beulfestigkeit ist dabei vom jeweiligen Abstandhaltertyp abhängig und kann mehr als 50 bis 60 % betragen.

Zur Verbesserung der Störfallsicherheit ist deshalb in der DE 103 34 580 B3 vorgeschlagen worden, den Abstandhalter konstruktiv derart auszulegen, dass bei Überschreiten einer seitlich auf den Abstandhalter wirkenden Grenzkraft eine Verformung ausschließlich in einem Bereich des Abstandhalters beginnt, dessen Zellen sich außerhalb eines die Steuerstabführungsrohre enthaltenden Innenbereiches befinden. Dieses Verformungsverhalten kann dadurch erreicht werden, dass der Abstandhalter außerhalb dieses Innenbereiches mechanisch schwächer ausgelegt wird.

Der Erfindung liegt nun die Aufgabe zugrunde, ein Brennelement für einen Druckwasserkernreaktor anzugeben, das eine hohe Störfallsicherheit und gute thermohydraulische Eigenschaften aufweist.

Die genannte Aufgabe wird gemäß der Erfindung gelöst mit einem Brennelement mit den Merkmalen des Patentanspruches 1. Gemäß diesen Merkmalen ist ausgehend von dem aus der DE 103 34 580 B3 bekannten Brennelement, bei dem zumindest ein Abstandhalter in einem ersten Teilbereich mechanisch stärker ausgelegt ist als in einem zweiten Teilbereich, in dem zweiten Teilbereich zumindest ein in einen zwischen den Brennstäben gebildeten Strömungsunterkanal hineinragender und den Strömungswiderstand erhöhender Widerstandkörper vorgesehen, der einer mit der mechanisch schwächeren Auslegung einhergehenden Verringerung des Strömungswiderstandes im zweiten Teilbereich entgegenwirkt. Die Erfindung beruht nun auf der Erkenntnis, dass eine schwächere Auslegung des Abstandhalters im Randbereich, die beispielsweise durch eine Verringerung der Wandstärke der Gitterstege im Randbereich oder durch eine Verringerung der Anzahl oder Ausdehnung der Schweißpunkte, an denen die Gitterstege miteinander verschweißt sind, erreicht wird, dazu führt, dass der Strömungswiderstand des Abstandhalters in diesen geschwächten Außenbereichen kleiner ist als im Innenbereich. Mit anderen Worten: Die zur Verbesserung des EOL-Verhaltens eingebrachte mechanische Inhomogenität des Abstandhalters kann eine hydraulische Inhomogenität, d.h. eine heterogene Verteilung des aus der Strömung des Kühlmittels durch den Abstandhalter in Axialrichtung der Brennstäbe entstehenden Druckverlustes verursachen.

Durch die gezielte Erhöhung des Strömungswiderstandes im mechanisch schwächer ausgelegten zweiten Teilbereich gemäß der Erfindung wird dort lokal der Druckverlust erhöht, so dass die durch die unterschiedliche mechanische Auslegung des ersten und zweiten Teilbereiches entstandenen hydraulischen Inhomogenitäten verringert werden. Mit anderen Worten: Durch die Maßnahmen gemäß der Erfindung wird trotz einer Inhomogenität der mechanischen Auslegung der Abstandhalter eine weitgehende Homogenität des über den Abstandhaltern entstehenden Druckverlustes erzielt. Dabei ist vorzugsweise angestrebt, die oder den Widerstandskörper derart auszulegen, dass die mit der mechanisch schwächeren Auslegung einhergehende Verringerung des Strömungswiderstandes im zweiten Teilbereich zumindest annähernd kompensiert wird.

Vorzugsweise sind die Widerstandskörper an einer Kreuzungsstelle der Gitterstege, d.h. im Zentrum eines durch vier benachbarte Brennstäbe gebildeten Strömungsunterkanals angeordnet. Durch eine solche mittige, insbesondere im Bereich der Kante eines Gittersteges vorgenommene Anordnung der Widerstandskörper können auf besonders einfache Weise lokale Strömungsprofile erzeugt werden, die rotationssymmetrisch um das Zentrum des Strömungsunterkanals verlaufen, so dass die Widerstandskörper keine Strömungsmuster erzeugen, die quer zur Strömungsrichtung des Kühlmediums wirkende Kräfte auf das Brennelement verursachen.

Bei den Widerstandskörpern kann es sich um ein mit zumindest einem der Gitterstege verschweißtes separates Bauteil handeln. Alternativ hierzu und fertigungstechnisch besonders einfach können die Widerstandskörper auch durch eine in die Gitterstege eingebrachte Ausformung gebildet sein.

Die Zellen des Abstandhalters sind vorzugsweise durch am Rand angeordnete Gitterrandstege und innenliegende Gitterinnenstege gebildet, wobei im Folgenden der Begriff Gittersteg sowohl Gitterrandstege als auch Gitterinnenstege bezeichnen kann. Die Randzone bzw. der zweite Teilbereich, in dem eine solche mechanische Schwächung vorgenommen wird, ist dann aus den außerhalb des Innenbereiches liegenden Gitterinnenstegen, den über den Innenbereich hinausragenden Enden der den Innenbereich durchsetzenden Gitterinnenstege und den Gitterrandstegen gebildet.

Vorzugsweise sind die Gitterstege durch Schweißverbindungen miteinander verbunden, wobei zumindest ein Teil der Schweißverbindungen der Gitterinnenstege außerhalb des ersten Teilbereiches mit einer geringeren Festigkeit als die Schweißverbindungen der Gitterinnenstege innerhalb des ersten Teilbereiches ausgeführt ist.

In vorteilhafter Ausgestaltung der Erfindung weist zumindest ein Teil der Gitterinnenstege in einem außerhalb des ersten Teilbereich liegenden Stegbereich gegenüber den innerhalb des Innenbereiches angeordneten Stegbereichen eine Materialschwächung auf, wobei diese Materialschwächung insbesondere durch eine kleinere Wanddicke (Stegbreite) dieser Gitterinnenstege herbeigeführt ist.

Zur weiteren Erläuterung der Erfindung wird auf die Ausführungsbeispiele der Zeichnung verwiesen. Es zeigen:
- Fig. 1: einen Abstandhalter gemäß der Erfindung in einer schematischen Draufsicht,
- Fig. 2 - 5: jeweils eine Kreuzungsstelle eines Abstandhalters in einem Randbereich in einer perspektivischen Dar stellung bei dem jeweils unterschiedliche Ausfüh- rungsformen der Erfindung zur Erhöhung des lokalen Strömungswiderstandes veranschaulicht sind,
- Fig. 6: ein Brennelement für einen Druckwasserkernreaktor, wie es im Stand der Technik bekannt ist.

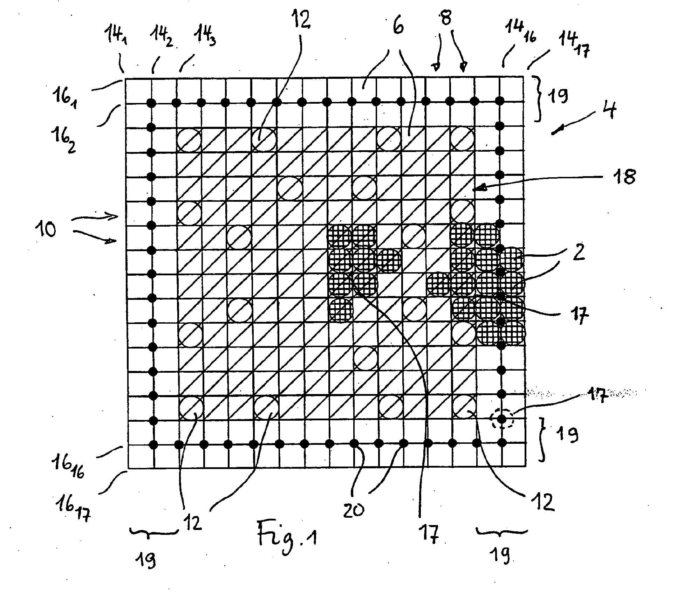

Gemäß Fig. 1 ist der Abstandhalter 4 aus Gitterstegen 14₁ - 14₁₇, und 16₁ - 16₁₇ aufgebaut, die an den Kreuzungsstellen miteinander verschweißt sind. Die Gitterstege 14₁, 14₁₇, 16₁ und 16₁₇ bilden den Rand des Gitters und werden im folgenden als Gitterrandstege bezeichnet. Die Gitterstege 14₂ - 14₁₆ und 16₂ - 16₁₆ verlaufen im Inneren des Gitters und werden im folgenden als Gitterinnenstege bezeichnet. Die sich kreuzenden Gitterstege 14₁ - 14₁₇, 16₁ - 16₁₇ bilden ein quadratisches Gitter mit einer Vielzahl (im Beispiel 16x16) von Zellen 6, durch die in den nicht von Stützrohren durchsetzten Zellen 6 Brennstäbe 2 geführt sind, von den in der Figur aus Gründen der Übersichtlichkeit nur einige dargestellt sind. Jeweils vier einander benachbarte Brennstäbe 2 legen einen Strömungsunterkanal 17 fest, durch den das Kühlmittel parallel zu den Brennstäben 2 (axial) und damit senkrecht zur Zeichenebene strömt.

Im Ausführungsbeispiel sind alle Stützrohre Steuerstabführungsrohre 12. Weitere Strukturrohre sind in diesem Ausführungsbeispiel nicht vorhanden.

Die Steuerstabführungsrohre 12 legen einen durch Schraffur hervorgehobenen ersten Teilbereich 18 fest, der im Ausführungsbeispiel durch einen von den Gitterinnenstegen 14₃ 14₁₅, 16₃ und 16₁₅ begrenzten quadratischen Innenbereich gebildet wird, der diese Gitterinnenstege 14₃,14₁₅, 16₃ und 16₁₅ umfasst. Dieser erste Teilbereich 18 ist von einem zweiten Teilbereich 19, im Beispiel der Figur ein aus zwei Spalten 8 bzw. Zeilen 10 bestehender Randbereich, umgeben. Der Abstandhalter 4 ist nun gemäß der DE 103 34 580 B3 in seinem ersten Teilbereich 18 mechanisch stärker ausgelegt als im zweiten Teilbereich 19. Die zu einer solchen stärkeren Auslegung des ersten Teilbereiches 18 bzw. bei umgekehrter Betrachtungsweise schwächeren Auslegung des zweiten Teilbereiches 19 erforderlichen technischen Maßnahmen - Variation der Dicke bzw. Anzahl der Schweißpunkte, Vergrößerung bzw. Verringerung der wandstärke der Gitterstege, Einbringung von Materialschwächungen, beispielsweise in Form von Ausnehmungen in den Stegbereichen des zweiten Teilbereiches 19 - würden nun dazu führen, dass der Strömungswiderstand des Abstandhalters 4 im ersten Teilbereich 18 größer wäre als im zweiten Teilbereich 19, so dass der vom Abstandhalter 4 im parallel zur Axialrichtung der Brennstäbe 2, d.h. senkrecht zur Gitterebene strömenden Kühlmittel erzeugte Druckverlust inhomogen werden würde. Dadurch würden Druckgradienten in der senkrecht zur Axialrichtung der Brennstäbe verlaufenden Gitterebene erzeugt werden, die zu unerwünschten Querströmungen führen würden.

Um diese Inhomogenität zu vermeiden, sind deshalb gemäß der Erfindung im zweiten Teilbereich 18 Maßnahmen vorgesehen, mit denen die Verringerung des Strömungswiderstandes weitgehend kompensiert werden.

In der Figur ist dies mit Hilfe der durch einen schwarzen Kreis gekennzeichneten Stellen veranschaulicht, mit denen angedeutet ist, dass die außerhalb dieses ersten Teilbereiches 18 befindlichen Strömungsunterkanäle 17 im Bereich der sich dort kreuzenden Gitterunnerrstege 16₂=16₁₆ bzw. 14₂-14₂ mit einem Widerstandskörper 20 versehen sind, der in diesen Strömungsunterkanälen 17 den Strömungswiderstand erhöht, ohne dabei die bewusst gemäß der DE 103 34 580 B3 an den im zweiten Teilbereich 19 verlaufenden Gitterinnenstegen 14₂₋₁₆ und 16₂₋₁₆ eingebrachte mechanische Schwächung aufzuheben.

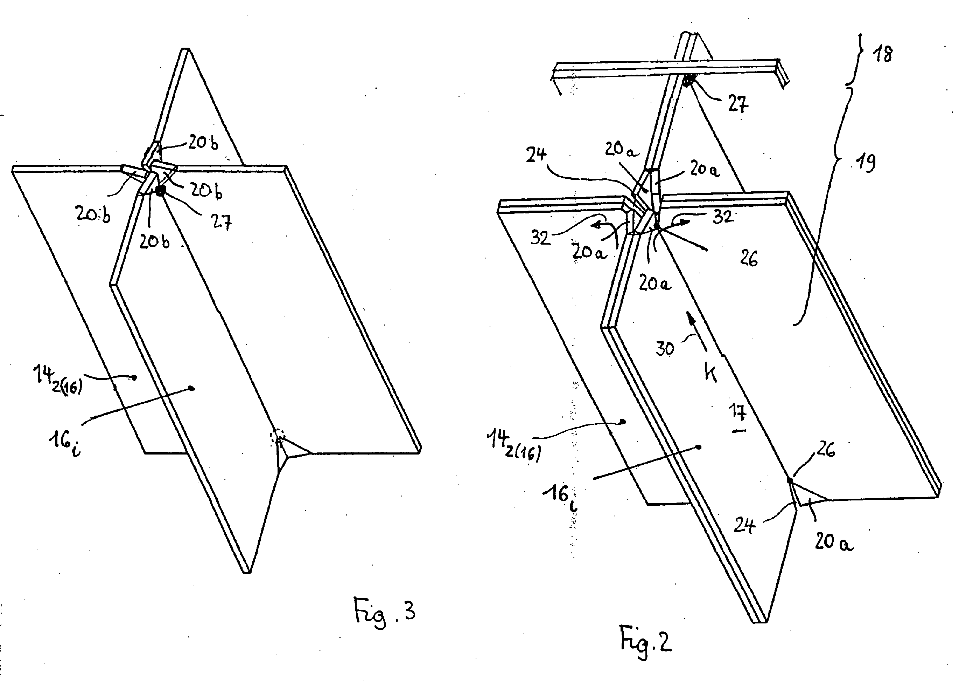

Im Ausführungsbeispiel gemäß Fig. 2 wird eine solche Erhöhung des Strömungswiderstandes an einer im zweiten Teilbereich 19 befindlichen Kreuzungsstelle bei einem aus doppelwandigen Gitterstegen 14₁, 16ᵢ aufgebauten Abstandhalter 4 dadurch erzielt, dass jeder Blechstreifen eines Gitterinnensteges 16ᵢ an seiner Oberkante (bei vertikal im Kern eingesetztem Brennelement) im Bereich der Kreuzungsstelle eine Ausbiegung oder Ausformung 20a aufweist, die in den dieser Kreuzungsstelle zugeordneten Strömungsunterkanal 17 bzw. das Innere der jeweils angrenzenden Zelle 6 geneigt ist. Diese Ausformungen 20a haben eine annähernd dreieckige Gestalt. Der den Gitterinnensteg 16ᵢ kreuzende Gitterinnensteg 14₂ oder 14₁₆ hat in diesem Bereich eine annähernd V-förmige Aussparung 24 und ist an deren Basis mit dem Gitterinnensteg 16ᵢ verschweißt. Diese Schweißverbindung ist entsprechend der in der DE 103 34 580 B3 vorgeschlagenen Vorgehensweise schwächer ausgelegt als die im ersten Telbereich 18 vorliegenden Schweißverbindungen. Dies ist in der Figur durch einen Schweißknoten 26 veranschaulicht, der einen kleineren Durchmesser als die im ersten Teilbereich 18 vorliegenden Schweißknoten 27 (in der Figur übertrieben und schematisch an einer benachbarten Kreuzungsstelle eingezeichnet) aufweist, um auf diese Weise eine gezielte Schwächung der mechanischen Stabilität im zweiten Teilbereich 19 zu erzeugen. Auch an der der Oberkante gegenüberliegenden Unterkante sind Ausformungen 20a, von denen in der Figur nur eine Ausformung 20a sichtbar ist am Gitterinnensteg 14₂ oder 14₁₆ angebracht und der Gitterinnensteg 16ᵢ ist mit der V-förmigen Aussparung 24 versehen. Auch hier befindet sich an der Basis der V-förmigen Aussparung 24 ein kleiner Schweißknoten 26 mit dem die sich kreuzenden Gitterstege 16ᵢ und 14_{2,16} miteinander verschweißt sind.

Das in Pfeilrichtung 30 (axial) strömende Kühlmittel K wird an den Ausformungen 20a abgelenkt, so dass eine parallel zur Gitterebene gerichtete Strömungskomponente entsteht, wie dies in der Figur durch Pfeile 32 veranschaulicht ist. Die Ablenkung ist dabei paarweise gegensinnig orientiert, so dass die durch die Ablenkung der Strömung auf den Abstandhalter und damit auf das Brennelement erzeugte Querkraft verschwindet.

Im Ausführungsbeispiel gem. Fig. 3 sind bei einem aus einwandigen Gitterstegen 14₂₍₁₆₎,16ᵢ aufgebauten Abstandhalter 4 sowohl an der Oberkante als auch an der Unterkante der Gitterstege 14₂(₁₆),16ᵢ im Bereich der Kreuzungsstelle ebenfalls dreieckförmige Ausformungen 20b vorgesehen, die dem strömenden Kühlmittel strömungsabseitig einen Drall um die Mittenachse des Strömungsunterkanals 17 aufprägen. Die Gitterinnenstege 14₂₍₁₆₎ und 16ᵢ sind durch Schweißknoten 27 im Bereich der Oberkante miteinander verschweißt, deren Ausdehnung und die damit verbundene mechanische Festigkeit der Schweißverbindung vergleichbar ist mit den im ersten Teilbereich verwendeten Schweißknoten. In diesem Ausführungsbeispiel wird die gezielte mechanische Schwächung im zweiten Teilbereich dadurch erzielt, dass die Anzahl der Schweißknoten 27 und damit die Festigkeit der Schweißverbindung verringert ist. Dies ist durch das Fehlen eines Schweißknotens - in der Figur gestrichelt angedeutet - an der Unterkante veranschaulicht.

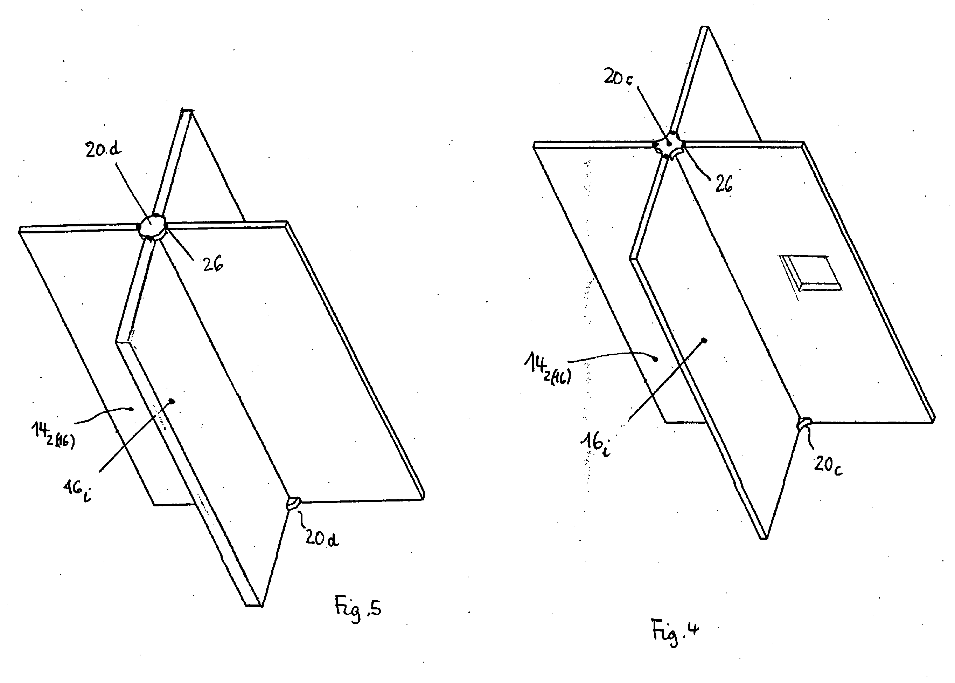

In den Ausführungsbeispielen gemäß Figuren 4 und 5 werden die Widerstandskörper durch separat mit den Gitterinnenstegen 14₂₍₁₆₎ und 16ᵢ mit jeweils vier Schweißknoten 26 verschweißte scheibenförmige Bauteile 20c bzw. 20d gebildet, die im Ausführungsbeispiel gem. Fig. 4 eine annähernd kreuzförmige und im Ausführungsbeispiel gemäß Fig. 5 eine kreisscheibenförmige Gestalt haben. Die Gitterinnenstege 14₂₍₁₆₎ und 16ᵢ sind in diesem Fall an den Kreuzungsstellen mit Aussparungen versehen, in die die Bauteile 20c, d eingelegt werden, so dass deren von der Auflagefläche abgewandte Flachseite in der selben Ebene wie die Oberkante bzw. Unterkante der Gitterstege 14_{2,16} bzw. 16ᵢ liegt.

Im Ausführungsbeispiel gemäß Figur 4 erfolgt die gezielte Schwächung des zweiten Teilbereiches durch eine durch Ausnehmungen 36 verursachte Materialschwächung, während im Ausführungsbeispiel gemäß Figur 5 vorgesehen ist, dass die vollständig im zweiten Teilbereich verlaufenden Gitterinnenstege 14₂ und 14₁₆ (und analog die Gitterinnenstege 16₂ und 16₁₆) eine geringere Wandstärke aufweisen als die anderen Gitterstege.

Die Erfindung ist nicht auf Brennelemente mit dem im Ausführungsbeispiel dargestellten quadratischen 16x16 Abstandhalter beschränkt, sondern auch auf Brennelemente mit anderen Abstandhaltergeometrien anwendbar.

## Patentansprüche

1. Brennelement für einen Druckwasserkernreaktor, mit einer Vielzahl von Brennstäben, die in einer Mehrzahl von axial beabstandeten Abstandhaltern (4) geführt sind, die jeweils ein aus Gitterstegen (14₁₋₁₇, 16₁₋₁₇) aufgebautes quadratisches Gitter mit einer Vielzahl von Zellen (6) bilden, die in Reihen (10) und Spalten (8) angeordnet sind, und bei dem durch eine Anzahl dieser Zellen (6) jeweils ein Steuerstabführungsrohr (12) hindurchgeführt ist, wobei zumindest ein Abstandhalter (4) in einem ersten Teilbereich (18) mechanisch stärker ausgelegt ist als in einem zweiten Teilbereich (19) und in dem zweiten Teilbereich (19) mit zumindest einem in einen zwischen den Brennstäben (2) gebildeten Strömungsunterkanal (17) hineinragenden und den Strömungswiderstand erhöhenden Widerstandskörper (20) versehen ist, der einer mit der mechanisch schwächeren Auslegung einhergehenden Verringerung des Strömungswiderstandes im zweiten Teilbereich (19) entgegenwirkt.

2. Brennelement nach Anspruch 1, bei dem der oder die Widerstandskörper (20) die mit der mechanisch schwächeren Auslegung einhergehende Verringerung des Strömungswiderstandes im zweiten Teilbereich (19) zumindest annähernd kompensieren.

3. Brennelement nach Anspruch 1 oder 2, bei dem der Widerstandskörper (20) an einer Kreuzungsstelle der Gitterstege (14ᵢ, 16ᵢ) angeordnet ist.

4. Brennelement nach einem der vorhergehenden Ansprüche, bei dem der Widerstandskörper (20) im Bereich der Kante eines Gitterstegs (14ᵢ,16ᵢ) angeordnet ist.

5. Brennelement nach einem der vorhergehenden Ansprüche, bei dem der Widerstandskörper (20) ein mit zumindest einem der Gitterstege (14ᵢ,16ᵢ) verschweißtes Bauteil (20c,d) ist.

6. Brennelement nach einem der Ansprüche 1 bis 4, bei dem der Widerstandskörper eine in einen Gittersteg (14ᵢ, 16ᵢ) eingebrachte Ausformung (20a,b) ist.

7. Brennelement nach einem der vorhergehenden Ansprüche, bei dem eine Mehrzahl von Widerstandskörpern (20) derart vorgesehen sind, dass sich die von diesen durch das strömende Kühlmittel (K) auf das Brennelement jeweils quer zur Strömungrichtung (30) des Kühlmittels (K) auf das Brennelement ausgeübten Kräfte wenigstens annähernd kompensieren.

8. Brennelement nach einem der vorhergehenden Ansprüche, bei dem der erste Teilbereich (18) ein die Steuerstabführungsrohre (12) enthaltender Innenbereich ist und der zweite Teilbereich (19) durch Zellen (6) gebildet ist, die sich außerhalb dieses ersten Teilbereiches (18) befinden.

9. Brennelement nach Anspruch 8, bei dem die Zellen (6) des Abstandhalters (4) durch am Rand angeordnete Gitterrandstege (14_{1,17}, 16_{1,17}) und innenliegende Gitterinnenstege (14₂₋₁₆, 16₂₋₁₆) gebildet sind, und bei dem die Gitterstege (14₁₋₁₇, 16₁-₁₇) durch Schweißverbindungen (26) miteinander verbunden sind, wobei zumindest ein Teil der Schweißverbindungen der Gitterinnenstege (14₂₋₁₆, 16₂₋₁₆) außerhalb des ersten Teilbereiches (18) gegenüber den innerhalb des ersten Teilbereiches (18) befindlichen Schweißverbindungen eine geringere Festigkeit aufweist.

10. Brennelement nach einem der Ansprüche 8 oder 9, bei dem zumindest ein Teil der Gitterinnenstege (14₂₋₁₆, 16₂₋₁₆) in einem außerhalb des ersten Teilbereiches (18) liegenden Stegbereich eine Materialschwächung aufweisen.

11. Brennelement nach Anspruch 10, bei dem die außerhalb des Innenbereiches (18) angeordneten Gitterinnenstege (14₂, 14₁₆, 16₂, 16₁₆) eine kleinere Wanddicke aufweisen als die den ersten Teilbereich (18) durchsetzenden Gitterinnenstege (14₃₋₁₅, 16₃₋₁₅).

## Claims

1. Fuel assembly for a pressurized-water nuclear reactor, having a large number of fuel rods which are guided in a plurality of axially spaced spacers (4) which in each case form a square grid, which is made of grid webs (14₁₋₁₇, 16₁₋₁₇) with a large number of cells (6) which are arranged in rows (10) and columns (8), and in which in each case one control rod guide tube (12) is guided through a number of said cells (6), wherein at least one spacer (4) is designed to be mechanically stronger in a first partial region (18) than in a second partial region (19) and is provided in the second partial region (19) with at least one resistance body (20) which projects into a flow subpassage (17), which is formed between the fuel rods (2), increases the flow resistance and counteracts a reduction in the flow resistance in the second partial region (19), which reduction accompanies the mechanically weaker design.

2. Fuel assembly according to Claim 1, in which the resistance body or bodies (20) at least approximately compensate for the reduction in the flow resistance in the second partial region (19), which reduction accompanies the mechanically weaker design.

3. Fuel assembly according to Claim 1 or 2, in which the resistance body (20) is arranged at a point of intersection of the grid webs (14ᵢ, 16ᵢ) .

4. Fuel assembly according to one of the preceding claims, in which the resistance body (20) is arranged in the region of the edge of a grid web (14ᵢ, 16ᵢ).

5. Fuel assembly according to one of the preceding claims, in which the resistance body (20) is a component (20c, d) which is welded together with at least one of the grid webs (14ᵢ, 16ᵢ).

6. Fuel assembly according to one of Claims 1 to 4, in which the resistance body is a formation (20a, b) introduced into a grid web (14ᵢ, 16i).

7. Fuel assembly according to one of the preceding claims, in which a plurality of resistance bodies (20) are provided such that the forces exerted by the latter by way of the flowing coolant (K) onto the fuel assembly in each case transverse to the flow direction (30) of the coolant (K) onto the fuel assembly are at least approximately compensated for.

8. Fuel assembly according to one of the preceding claims, in which the first partial region (18) is an internal region containing the control rod guide tubes (12) and the second partial region (19) is formed by cells (6) which are located outside this first partial region (18).

9. Fuel assembly according to Claim 8, in which the cells (6) of the spacer (4) are formed by grid edge webs (14_{1,17}, 16_{1,17}), arranged on the edge, and internal grid webs (14₂₋₁₆, 16₂₋₁₆) located inside, and in which the grid webs (14₁₋₁₇, 16₁₋₁₇) are connected to one another by weld connections (26), wherein at least some of the weld connections of the internal grid webs (14₂₋₁₆, 16₂₋₁₆) outside the first partial region (18) exhibit a lower stability with respect to the weld connections located inside the first partial region (18).

10. Fuel assembly according to either of Claims 8 and 9, in which at least some of the internal grid webs (14₂₋₁₆, 16₂₋₁₆) have a material weakening in a web region which is located outside the first partial region (18).

11. Fuel assembly according to Claim 10, in which the internal grid webs (14₂, 14₁₆, 16₂, 16₁₆) arranged outside the internal region (18) have a smaller wall thickness than the internal grid webs (14₃₋₁₅, 16₃₋₁₅) which pass through the first partial region (18).

## Revendications

1. Elément combustible pour un réacteur nucléaire à eau sous pression, comprenant une pluralité de barres de combustible, qui sont guidées dans une pluralité d'écarteurs (4) espacés axialement, lesquels forment à chaque fois une grille carrée constituée d'entretoises de grille (14₁₋₁₇, 16₁₋₁₇), comprenant une pluralité de cellules (6), lesquelles sont disposées dans des rangées (10) et des colonnes (8), et sur lequel à chaque fois un tuyau de guidage de barre de commande (12) est passé à travers un certain nombre de ces cellules (6), au moins un écarteur (4) étant conçu dans une première zone partielle (18) mécaniquement plus robuste que dans une seconde zone partielle (19) et étant doté dans la seconde zone partielle (19) d'au moins un corps de résistance (20) dépassant dans un sous-canal d'écoulement (17) formé entre les barres de combustible (2) et augmentant la résistance à l'écoulement, lequel corps s'oppose à une réduction, s'accompagnant de la conception mécaniquement plus faible, de la résistance à l'écoulement dans la seconde zone partielle (19).

2. Elément combustible selon la revendication 1, sur lequel le ou les corps de résistance (20) compense(ent) au moins approximativement la réduction, s'accompagnant de la conception mécaniquement plus faible, de la résistance à l'écoulement dans la seconde zone partielle (19).

3. Elément combustible selon la revendication 1 ou 2, sur lequel le corps de résistance (20) est disposé en un point de croisement des entretoises de grille (14ᵢ, 16ᵢ).

4. Elément combustible selon l'une quelconque des revendications précédentes, sur lequel le corps de résistance (20) est disposé dans la zone de l'arête d'une entretoise de grille (14ᵢ, 16ᵢ).

5. Elément combustible selon l'une quelconque des revendications précédentes, sur lequel le corps de résistance (20) est un composant (20c,d) soudé avec au moins l'une des entretoises de grille ((14ᵢ, 16ᵢ).

6. Elément combustible selon l'une quelconque des revendications 1 à 4, sur lequel le corps de résistance est une partie formée (20a,b) introduite dans une entretoise de grille ((14ᵢ, 16ᵢ).

7. Elément combustible selon l'une quelconque des revendications précédentes, sur lequel une pluralité de corps de résistance (20) est prévue de telle sorte que les forces exercées par ces corps par le fluide de refroidissement (K) circulant sur l'élément combustible respectivement transversalement au sens d'écoulement (30) du fluide de refroidissement (K) sur l'élément combustible se compensent au moins approximativement.

8. Elément combustible selon l'une quelconque des revendications précédentes, sur lequel la première zone partielle (18) est une zone intérieure contenant les tuyaux de guidage de barre de commande (12) et la seconde zone partielle (19) est formée par des cellules (6) qui se trouvent à l'extérieur de cette première zone partielle (18).

9. Elément combustible selon la revendication 8, sur lequel les cellules (6) de l'écarteur (4) sont formées par des entretoises de bord de grille (14₁₋₁₇, 16₁₋₁₇) disposées sur le bord et des entretoises d'intérieur de grille (14₂₋₁₇, 16₂₋₁₇) intérieures, et sur lequel les entretoises de grille (14₁₋₁₇, 16₁₋₁₇), sont reliées par des assemblages soudés (26) les unes aux autres, au moins une partie des assemblages soudés des entretoises d'intérieur de grille (14₂₋₁₇, 16₂₋₁₇) présentant à l'extérieur de la première zone partielle (18) une solidité plus faible par rapport aux assemblages soudés se trouvant à l'intérieur de la première zone partielle (18).

10. Elément combustible selon l'une quelconque des revendications 8 ou 9, sur lequel au moins une partie des entretoises d'intérieur de grille (14₂₋₁₆, 16₂₋₁₆) présente un affaiblissement de matériau dans une zone d'entretoise située à l'extérieur de la première zone partielle (18).

11. Elément combustible selon la revendication 10, sur lequel les entretoises d'intérieur de grille (14₂, 14₁₆, 16₂, 16₁₆) disposées à l'extérieur de la zone intérieure (18) présentent une épaisseur de paroi plus petite que les entretoises d'intérieur de grille (14₃₋₁₅, 16₃₋₁₅) traversant la première zone partielle (18).
